(19) Europäisches Patentamt / European Patent Office / Office européen des brevets

(11) **EP 3 128 582 B1**

(12) **EUROPEAN PATENT SPECIFICATION**

(45) Date of publication and mention of the grant of the patent:
**09.01.2019 Bulletin 2019/02**

(21) Application number: **15772398.2**

(22) Date of filing: **31.03.2015**

(51) Int Cl.:
*H01M 4/133* (2010.01)      *H01M 4/587* (2010.01)
*H01M 4/62* (2006.01)       *H01M 10/052* (2010.01)
*H01M 10/0562* (2010.01)    *H01M 10/0565* (2010.01)
*H01M 10/0525* (2010.01)    *H01M 4/02* (2006.01)

(86) International application number:
**PCT/JP2015/060074**

(87) International publication number:
**WO 2015/152214 (08.10.2015 Gazette 2015/40)**

(54) **NEGATIVE ELECTRODE FOR ALL-SOLID BATTERY AND ALL-SOLID BATTERY INCLUDING SAME**

NEGATIVELEKTRODE FÜR EINE FESTKÖRPERBATTERIE UND FESTKÖRPERBATTERIE DAMIT

ÉLECTRODE NÉGATIVE POUR BATTERIE ENTIÈREMENT SOLIDE ET BATTERIE ENTIÈREMENT SOLIDE COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014 JP 2014074106**

(43) Date of publication of application:
**08.02.2017 Bulletin 2017/06**

(73) Proprietor: **Kureha Corporation**
**Chuo-ku**
**Tokyo 103-8552 (JP)**

(72) Inventors:
• **AOKI, Kenta**
  **Tokyo 103-8552 (JP)**
• **KOBAYASHI, Shota**
  **Tokyo 103-8552 (JP)**

• **YAGUCHI, Tatsuya**
  **Tokyo 103-8552 (JP)**
• **IMOTO, Hiroshi**
  **Tokyo 103-8552 (JP)**
• **TADA, Yasuhiro**
  **Tokyo 103-8552 (JP)**
• **SONOBE, Naohiro**
  **Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**EP-A1- 0 613 197        WO-A1-2012/099178**
**JP-A- H10 284 089       JP-A- 2009 200 014**
**US-A1- 2013 302 698**

**Description**

TECHNICAL FIELD

The present invention relates to a negative electrode for an all-solid battery and an all-solid battery containing the same. With the present invention, it is possible to obtain an all-solid battery having high energy density.

BACKGROUND ART

In recent years, the notion of mounting large lithium-ion secondary batteries, having high energy density and excellent output energy characteristics, in electric vehicles has been investigated in response to increasing concern over environmental issues. In small mobile device applications such as mobile telephones or laptop computers, the capacity per unit volume is important, so graphitic materials with a large density have primarily been used as active material for negative electrodes. However, lithium-ion secondary batteries for automobiles are difficult to replace at an intermediate stage due to their large size and high cost. Therefore, durability is required to be the same as that of an automobile, so there is a demand for the realization of a life span of at least 10 years (high durability). When graphitic materials or carbonaceous materials with a developed graphite structure are used, there is a tendency for damage to occur due to crystal expansion and contraction caused by repeated lithium doping and de-doping, which diminishes the charging and discharging repetition performance. Therefore, such materials are not suitable as negative electrode materials for lithium-ion secondary batteries for automobiles which require high cycle durability. In contrast, non-graphitizable carbon is suitable for use in automobile applications from the perspective of involving little particle expansion and contraction due to lithium doping and de-doping and having high cycle durability (Patent Document 1). In addition, non-graphitizable carbon has a gentle charging and discharging curve in comparison to graphitic materials, and the potential difference with charge restriction is larger, even when rapid charging that is more rapid than the case where graphitic materials are used as negative electrode active materials is performed, so non-graphitizable carbon has the feature that rapid charging is possible. Furthermore, since non-graphitizable carbon has lower crystallinity and more sites capable of contributing to charging and discharging than graphitic materials, non-graphitizable carbon is also characterized by having excellent rapid charging and discharging (input/output) characteristics. However, there is a demand for rapid charging and discharging (input/output) characteristics that are outstanding in comparison to those of a lithium-ion secondary battery for small mobile devices, wherein the charging time, which is 1 to 2 hours for small mobile devices, is a few tens of seconds for a power supply for a hybrid automobile when taking into consideration the fact that energy is regenerated when braking, and discharging is also a few tens of seconds when taking into consideration the time of stepping on the acceleration pedal. The negative electrode material described in Patent Document 1 has high durability but is inadequate as a negative electrode material for a lithium-ion secondary battery for an automobile requiring outstanding charging and discharging characteristics, and further improvements in energy density are anticipated.

EP 0 613 197 A1 describes a carbonaceous electrode having improved capacities of doping and dedoping a cell active substance, such as lithium, and suitable for a non-aqueous solvent-type secondary battery, which is constituted by a carbonaceous material having a specific microtexture.

This carbonaceous material is characterized by having an average (002)-plane spacing of at least 0.365 nm according to X-ray diffraction method, and by providing a residual carbonaceous substance showing an average (002)-plane spacing of at most 0.350 nm according to X-ray diffraction method when the carbonaceous material is treated with an $H_2O$-$N_2$ equi-molar gaseous mixture at 900°C up to a weight reduction of 60 %.

From US 2013/0302698 A1 a non-aqueous electrolyte battery is known, which has a high capacity and a high volume power density and can have an enhanced charge-discharge cycle capability. The non-aqueous electrolyte battery includes a positive-electrode layer, a negative-electrode layer, and a solid-electrolyte layer disposed between these layers. The negative-electrode layer contains a powder of a negative-electrode active material and a powder of a solid electrolyte. In the negative-electrode active material, a charge-discharge volume change ratio is 1 % or less and the powder has an average particle size of 8 $\mu$m or less. The solid-electrolyte layer is formed by a vapor-phase process. Examples of the negative-electrode active material having a charge-discharge volume change ratio of 1 % or less include $Li_4Ti_5O_{12}$ and non-graphitizable carbon.

CITATION LIST

Patent Literature

Patent Document 1: Japanese Unexamined Patent Application Publication No. H08-064207A

## SUMMARY OF INVENTION

Technical Problem

An object of the present invention is to provide an all-solid battery having high energy density.

Solution to Problem

As a result of conducting dedicated research on all-solid batteries having high energy density, the present inventors made the surprising discovery that using a non-graphitizable carbonaceous material having specific physical properties as a negative electrode material for an all-solid battery leads to an improvement in discharge capacity at an anode potential of from 0 to 0.05 V on the basis of a lithium reference electrode.
The present invention is based on such knowledge.
Therefore, the present invention relates to:

[1] a negative electrode for an all-solid battery comprising:

a carbonaceous material having a true density of from 1.30 $g/cm^3$ to 1.70 $g/cm^3$ determined by a butanol method, a specific surface area of from 0.5 to 50.0 $m^2/g$, an average particle size $D_{v50}$ of from 1 to 50 $\mu m$, and a combustion peak T (°C) according to differential thermal analysis and a butanol true density $\rho_{Bt}$ ($g/cm^3$) satisfying the following formula (1):

$$300 \leq T-100 \times \rho_{Bt} \leq 570 \qquad (1)$$

and
a solid electrolyte.

The negative electrode for an all-solid battery has preferably a discharge capacity at 0 to 0.05 V of not less than 30 mAh/g on the basis of a lithium reference electrode when the carbonaceous material is used as a negative electrode;

[2] the negative electrode for an all-solid battery according to [1], wherein the carbonaceous material is a carbonaceous material having a main resonance peak observed in a range of from 80 to 200 ppm on a low magnetic field side with a LiCl resonance line defined as 0 ppm when electrochemically doped with lithium and subjected to $^7$Li-NMR analysis;
[3] the negative electrode for an all-solid battery according to any one of [1] or [2], wherein a carbon source of the carbonaceous material is an organic material derived from petroleum or coal, a thermoplastic resin, or a thermosetting resin;
[4] an all-solid battery containing the negative electrode for an all-solid battery described in any one of [1] or [2];
[5] a method for increasing a discharge capacity in a battery voltage range of from 0 to 0.05 V comprising the steps of:

(1) producing an all-solid battery using a carbonaceous material having a true density of from 1.30 $g/cm^3$ to 1.70 $g/cm^3$ determined by a butanol method, and an average particle size $D_{v50}$ of from 1 to 50 $\mu m$, and an exothermic peak temperature T (°C) according to differential thermal analysis and a butanol true density $\rho_{Bt}$ ($g/cm^3$) satisfying the following formula (1): $300 \leq T-100 \times \rho_{Bt} \leq 570 (1)$ as a negative electrode active material; and
(2) setting an anode potential of an obtained secondary battery to less than 0.05 V on the basis of a lithium reference electrode; and

[6] the all-solid battery according to [4] having a positive electrode active substance equivalent to not less than 500 Ah/kg per unit weight of the negative electrode active substance.

Advantageous Effects of Invention

By using the negative electrode for an all-solid battery according to the present invention as a negative electrode for an all-solid battery, it is possible to improve the discharge capacity at an anode potential of from 0 to 0.05 V on the basis of a lithium reference electrode of the all-solid battery. This effect is achieved by using a carbonaceous material having the specific physical properties described below. As a result of an improvement in the discharge capacity at an anode potential of from 0 to 0.05 V on the basis of a lithium reference electrode, it becomes possible to set the voltage range of a secondary battery to a wide range, which in turn makes it possible to obtain an all-solid battery having high energy density.

When a non-graphitizable carbonaceous material having specific physical properties is used as the negative electrode for an all-solid battery, the repulsion of non-graphitizable carbon arising after pressure-molding at the time of the preparation of the negative electrode is suppressed, which makes it possible to ensure good adhesion at the interface between the non-graphitizable carbonaceous material and the solid electrolyte in the negative electrode and to thereby obtain a negative electrode having a small electrode deformation ratio before and after pressure-molding. That is, the negative electrode for an all-solid battery according to the present invention has a small electrode deformation ratio, and the adhesion at the interface between the non-graphitizable carbonaceous material and the solid electrolyte is good, so the resistance of the negative electrode decreases, which leads to an improvement in the discharge capacity at an anode potential of from 0 to 0.05 V on the basis of a lithium reference electrode.

In addition, the negative electrode for an all-solid battery according to the present invention has small expansion and contraction due to the insertion and removal of lithium. That is, since the expansion ratio at the time of charging is small, there is no risk of causing the destruction of the all-solid battery due to the expansion and contraction of the electrode, even if charging and discharging are repeated. In other words, when graphite (natural graphite or artificial graphite) or an easily graphitizable carbonaceous material is used as a negative electrode for an all-solid battery, the expansion and contraction of the negative electrode are large, and there is a possibility that structural problems may occur, but because the negative electrode for an all-solid battery according to the present invention has a small expansion ratio at the time of full charge, such structural problems do not occur.

Description of Embodiments

[1] Negative electrode for an all-solid battery

The negative electrode for an all-solid battery according to the present invention comprises:

a carbonaceous material having a true density of from 1.30 g/cm$^3$ to 1.70 g/cm$^3$ determined by a butanol method, a specific surface area of from 0.5 to 50.0 m$^2$/g, an average particle size $D_{v50}$ of from 1 to 50 $\mu$m, and a combustion peak T (°C) according to differential thermal analysis and a butanol true density $\rho_{Bt}$ (g/cm$^3$) satisfying the following formula (1):

$$300 \leq T - 100 \times \rho_{Bt} \leq 570 \qquad (1)$$

and

a solid electrolyte. In addition, when the carbonaceous material is used as a negative electrode, the discharge capacity at 0 to 0.05 V on the basis of a lithium reference voltage is preferably not less than 30 mAh/g. As a certain preferable mode, the carbonaceous material has a main resonance peak observed in a range of from 80 to 200 ppm on a low magnetic field side with a LiCl resonance line defined as 0 ppm when electrochemically doped with lithium and subjected to $^7$Li-NMR analysis.

Since the carbonaceous material used in the present invention has the physical properties described above, the carbonaceous material has a small expansion ratio at the time of charging and is structurally safe when used as a negative electrode material for an all-solid battery. In addition, since the carbonaceous material used in the present invention has the physical properties described above, it is possible to improve the discharge capacity at an anode potential of from 0 to 0.05 V on the basis of a lithium reference electrode of the all-solid battery.

(Carbonaceous material)

(Raw material of the carbonaceous material)

The carbonaceous material used in the negative electrode for an all-solid battery according to the present invention is not limited as long as the material has the physical properties described above, but a non-graphitizable carbonaceous material is preferable. The carbon source of the non-graphitizable carbonaceous material is not limited as long as non-graphitizable carbon can be produced, and examples include organic materials derived from petroleum or coal (for example, petroleum pitch or tar, or coal pitch or tar), thermoplastic resins (for example, ketone resins, polyvinyl alcohol, polyethylene terephthalate, polyacetal, polyacrylonitrile, styrene/divinylbenzene copolymers, polyimide, polycarbonate, modified polyphenylene ether, polybutylene terephthalate, polyarylate, polysulfone, polyphenylene sulfide, polyimide resins, fluororesins, polyamideimide, or polyetheretherketone), and thermosetting resins (for example, epoxy resins, urethane resins, urea resins, diallylphthalate resins, polyester resins, polycarbonate resins, silicon resins, polyacetal resins, nylon resins, furan resins, or aldehyde resins (for example, phenol resins, melamine resins, amino resins, and amide resins)). Note that a petroleum pitch or tar, a coal pitch or tar, or a thermoplastic resin can be used as a carbon source for non-graphitizable carbon by being infusibilized by oxidation treatment or the like.

(Average interlayer spacing of the (002) plane)

The average interlayer spacing of the (002) plane of a carbonaceous material indicates a value that decreases as the crystal integrity increases. The spacing of an ideal graphite structure yields a value of 0.3354 nm, and the value tends to increase as the structure is disordered. Accordingly, the average interlayer spacing is effective as an index indicating the carbon structure.

The average interlayer spacing of the (002) plane of the carbonaceous material used in the negative electrode for an all-solid battery according to the present invention, which is measured by X-ray diffraction, is from 0.360 to 0.400 nm and is more preferably not less than 0.370 nm and not greater than 0.400 nm. The average interlayer spacing is particularly preferably not less than 0.375 nm and not greater than 0.400 nm. A carbonaceous material having an average interlayer spacing of less than 0.360 nm may have poor cycle characteristics.

(Crystallite thickness $L_{c(002)}$ in the c-axis direction)

The crystallite thickness $L_{c(002)}$ in the c-axis direction of the carbonaceous material used in the negative electrode for an all-solid battery according to the present invention is from 0.5 to 10.0 nm. The upper limit of $L_{c(002)}$ is preferably not greater than 8.0 nm and more preferably not greater than 5.0 nm. When $L_{c(002)}$ exceeds 10.0 nm, the volume expansion and contraction accompanying lithium doping and de-doping may become large. As a result, the carbon structure may be ruined, and lithium doping and de-doping may be obstructed, which may lead to poor repetition characteristics.

(Specific surface area)

The specific surface area may be determined with an approximation formula derived from a BET formula based on nitrogen adsorption. The specific surface area of the carbonaceous material used in the negative electrode for an all-solid battery according to the present invention is from 0.5 to 50.0 $m^2/g$. The upper limit of the BET specific surface area is preferably not greater than 45 $m^2/g$, more preferably not greater than 40 $m^2/g$, and even more preferably not greater than 35 $m^2/g$. The lower limit of the BET specific surface area is preferably not less than 1 $m^2/g$. When the specific surface area exceeds 50 $m^2/g$, decomposition reactions with the solid electrolyte increase, which may lead to an increase in irreversible capacity and therefore a decrease in battery performance. On the other hand, when the BET specific surface area is less than 0.5 $m^2/g$ and the material is used as a negative electrode for an all-solid battery, there is a risk that the input/output characteristics may be diminished due to a decrease in the reaction area with the solid electrolyte.

(True density $\rho_{Bt}$ determined by a butanol method)

The true density of a graphitic material having an ideal structure is 2.27 $g/cm^3$, and the true density tends to decrease as the crystal structure becomes disordered. Accordingly, the true density can be used as an index expressing the carbon structure.

The true density of the carbonaceous material used in the negative electrode for an all-solid battery according to the present invention is from 1.30 $g/cm^3$ to 1.70 $g/cm^3$. The upper limit of the true density is preferably not greater than 1.60 $g/cm^3$ and more preferably not greater than 1.55 $g/cm^3$. The lower limit of the true density is preferably not less than 1.31 $g/cm^3$, more preferably not less than 1.32 $g/cm^3$, and even more preferably not less than 1.33 $g/cm^3$. Further, the lower limit of the true density may be not less than 1.40 $g/cm^3$. A carbonaceous material having a true density exceeding 1.7 $g/cm^3$ has a small number of pores of a size capable of storing lithium, and the doping and de-doping capacity is also small. Thus, this is not preferable. In addition, increases in true density involve the selective orientation of the carbon hexagonal plane, so the carbonaceous material often undergoes expansion and contraction at the time of lithium doping and de-doping, which is not preferable. A carbonaceous material having a true density of less than 1.30 $g/cm^3$ may have a large number of closed pores, and the doping and de-doping capacity may be reduced, which is not preferable. Furthermore, the electrode density decreases and thus causes a decrease in the volume energy density, which is not preferable.

Note that in this specification, "non-graphitizable carbon" is a general term for non-graphitizable carbon which does not transform into a graphite structure even when heat-treated at an ultra-high temperature of approximately 3,000°C, but a carbonaceous material having a true density of from 1.30 $g/cm^3$ to 1.70 $g/cm^3$ is called a non-graphitizable carbon here.

(Average particle size ($D_{v50}$))

The average particle size ($D_{v50}$) of the carbonaceous material used in the negative electrode for an all-solid battery according to the present invention is preferably from 1 to 50 $\mu$m. The lower limit of the average particle size is preferably not less than 1 $\mu$m, more preferably not less than 1.5 $\mu$m and particularly preferably not less than 2.0 $\mu$m. When the average particle size is less than 1 $\mu$m, the fine powder increases and the specific surface area increases. The reactivity with a solid electrolyte increases, and the irreversible capacity, which is a capacity that is charged but not discharged, also increases, and the percentage of the positive electrode capacity that is wasted thus increases. Thus, this is not preferable. The upper limit of the average particle size is preferably not greater than 40 $\mu$m and more preferably not greater than 35 $\mu$m. When the average particle size exceeds 50 $\mu$m, the diffusion free path of lithium within particles increases, which makes rapid charging and discharging difficult. Furthermore, in the case of a secondary battery, increasing the electrode area is important for improving the input/output characteristics, so it is necessary to reduce the coating thickness of the active material on the current collector at the time of electrode preparation. In order to reduce the coating thickness, it is necessary to reduce the particle size of the active material. From this perspective, the upper limit of the average particle size is preferably not greater than 50 $\mu$m.

(Discharge capacity in a battery voltage range of from 0 to 0.05 V on the basis of a lithium reference electrode using a carbonaceous material as a negative electrode) The carbonaceous material used in the negative electrode for an all-solid battery according to the present invention is not limited, but when the carbonaceous material is used as a negative electrode, the discharge capacity at 0 to 0.05 V on the basis of a lithium reference electrode is not less than 30 mAh/g.

The discharge capacity at 0 to 0.05 V is measured in accordance with the method described in "Battery capacity measurement" in the working examples. That is, a lithium electrode was produced in accordance with "Production of test battery", and a coin-type non-aqueous electrolytic lithium secondary battery using a liquid mixture of ethylene carbonate, dimethylcarbonate, and methyl ethyl carbonate as an electrolyte solution was produced. The charging method used here is a constant-current/constant-voltage method, wherein constant-current charging was performed at 0.5 $mA/cm^2$ until the terminal voltage reached 0 V. After the terminal voltage reached 0 V, constant-voltage charging was performed at a terminal voltage of 0 V, and charging was continued until the current value reached 20 $\mu$A. After the completion of charging, the battery circuit was opened for 30 minutes, and discharging was performed thereafter. Discharging was performed at a constant current of 0.5 $mA/cm^2$ until the final voltage reached 1.5 V. The discharge capacity at 0 to 0.05 V at this time was measured.

(Main resonance peak)

The carbonaceous material used in the negative electrode for an all-solid battery according to the present invention is not limited, but when electrochemically doped with lithium and subjected to $^7$Li-NMR analysis, a main resonance peak is observed in the range of from 80 to 200 ppm on the low magnetic field side with a LiCl resonance line defined as 0 ppm.

The main resonance peak refers to the peak having the maximum peak area among the resonance peaks in the range of from 0 ppm to 200 ppm on the low magnetic field side. The Knight shift of the main resonance peak demonstrates a characteristic shift in response to the mechanism for occluding lithium into the carbon structure. The occlusion of lithium into graphite is an occlusion mechanism involving the production of the lithium graphite interlayer compound $LiC_6$. A maximum occlusion of 372 mAh/g yields a Knight shift of approximately 44 ppm, and this value is not exceeded. On the other hand, the main resonance peak associated with the precipitation of metallic lithium corresponds to approximately 265 ppm.

When the carbonaceous material of the present invention is doped with lithium, the carbonaceous material has a structure in which lithium can be occluded in the carbonaceous material even in a form other than a graphite interlayer compound, so the Knight shift originating from the lithium with which the carbonaceous material is doped becomes large as the doped amount of lithium increases, eventually resulting in a Knight shift exceeding 80 ppm. When the doped amount of lithium increases further, a peak at approximately 265 ppm associated with the precipitation of metallic lithium appears in addition to the peaks between 80 and 200 ppm. Therefore, a Knight shift of 200 ppm or greater is not preferable from the perspective of safety. In addition, a carbonaceous material in which the Knight shift of the main resonance peak is less than 80 ppm is not preferable in that the doping capacity of the carbonaceous material is small. The Knight shift of the main resonance peak of the carbonaceous material of the present invention is preferably observed at not less than 90 ppm and more preferably not less than 95 ppm.

(Relationship between the combustion peak T (°C) and the butanol true density $\rho_{Bt}$ (g/cm³))

The carbonaceous material used in the negative electrode for an all-solid battery according to the present invention is a carbonaceous material used in the negative electrode for an all-solid battery according to the present invention in which the combustion peak T (°C) according to differential thermal analysis and the butanol true density $\rho_{Bt}$ (g/cm³) satisfy the following formula (1):

$$300 \leq T - 100 \times \rho_{Bt} \leq 570 \qquad (1).$$

A combustion peak typically refers to a change in response to the size of a carbon hexagonal plane of the carbonaceous material and the three-dimensional order thereof. A peak tends to appear on the high-temperature side for a larger carbon hexagonal plane and a higher three-dimensional order. Since such a carbonaceous material has a high three-dimensional order, the true density $\rho_{Bt}$ measured with a butanol method is also high. For example, a graphite material having a large carbon hexagonal plane and having an interlayer spacing of 0.3354 nm exhibits a combustion peak temperature of nearly 800°C. Such a carbonaceous material has a lithium occlusion mechanism involving the production of the lithium graphite interlayer compound $LiC_6$, and the doped amount of lithium is a maximum of 372 mAh/g.

On the other hand, a peak typically tends to appear on the low-temperature side for a smaller carbon hexagonal plane and a lower three-dimensional order. Such a carbonaceous material has many fine pores capable of occluding lithium within the carbonaceous material, and the doped amount thus increases. However, when the combustion peak appears excessively on the low temperature side, the amount of fine pores or the fine pore size becomes excessively large, and the specific surface area is large, which leads to increases in irreversible capacity and is therefore not preferable. In addition, since the amount of fine pores in the carbonaceous material is large, the true density $\rho_{Bt}$ measured with a butanol method becomes excessively low, which is not preferable from the perspective of the volume energy density. As a result of conducting dedicated research on the relationship between the combustion peak T, the true density $\rho_{Bt}$ measured with a butanol method, and a carbonaceous material having a high doping capacity, it was determined that when the carbonaceous material has a combustion peak T and a true density $\rho_{Bt}$ measured with a butanol method satisfying the relationship $300 \leq T - 100 \times \rho_{Bt} \leq 570$, the carbonaceous material has a high doping capacity. The carbonaceous material of the present invention preferably has a combustion peak T and a true density $\rho_{Bt}$ measured with a butanol method satisfying the relationship $310 \leq T - 100 \times \rho_B t \leq 530$ and more preferably $320 \leq T - 100 \times \rho_{Bt} \leq 510$. In addition, the lower limit of $T - 100 \times \rho_{Bt}$ of the carbonaceous material of the present invention may be 430.

(Solid electrolyte)

The negative electrode for an all-solid battery according to the present invention contains a solid electrolyte material. The solid electrolyte material that can be used is not limited to a material used in the field of lithium-ion secondary batteries, and a solid electrolyte material comprising an organic compound, an inorganic compound, or a mixture thereof may be used. The solid electrolyte material has ionic conductivity and insulating properties. A specific example is a polymer electrolyte (for example, a true polymer electrolyte), a sulfide solid electrolyte material, or an oxide solid electrolyte material, but a sulfide solid electrolyte material is preferable.

Examples of true polymer electrolytes include polymers having ethylene oxide bonds, crosslinked products thereof, copolymers thereof, and polyacrylonitrile- and polyacrylonitrile-based polymers, examples of which include polyethylene oxide, polyethylene carbonate, and polypropylene carbonate.

Examples of sulfide solid electrolyte materials include $Li_2S$, $Al_2S_3$, $SiS_2$, $GeS_2$, $P_2S_3$, $P_2S_5$, $As_2S_3$, $Sb_2S_3$, and mixtures and combinations thereof. That is, examples of sulfide solid electrolyte materials include $Li_2S-Al_2S_3$ materials, $Li_2S-SiS_2$ materials, $Li_2S-GeS_2$ materials, $Li_2S-P_2S_3$ materials, $Li_2S-P_2S_5$ materials, $Li_2S-As_2S_3$ materials, $Li_2S-Sb_2S_3$ materials, and $Li_2S$ materials, and $Li_2S-P_2S_5$ materials are particularly preferable. Further, $Li_3PO_4$, halogens, or halogenated compounds may be added to these solid electrolyte materials and used as solid electrolyte materials.

Examples of oxide solid electrolyte materials include oxide solid electrolyte materials having a perovskite-type, NASICON-type, or garnet-type structure, examples of which include $La_{0.51}LiTiO_{2.94}$, $Li_{1.3}Al_{0.3}Ti_{1.7}(PO_4)_3$, $Li_7La_3Zr_2O_{12}$, and the like.

The shape of the solid electrolyte material is not limited as long as the material functions as an electrolyte. The average particle size of the solid electrolyte material is also not particularly limited but is preferably from 0.1 μm to 50 μm.

The lithium ion conductivity of the solid electrolyte material is not limited as long as the effect of the present invention can be achieved, but the lithium ion conductivity is preferably not less than $1 \times 10^{-6}$ S/cm and more preferably

not less than $1\times10^{-5}$ S/cm.

The $Li_2S-P_2S_5$ material described above can also be produced from $Li_2S$ and $P_2S_5$ or may be produced using $Li_2S$, a simple substance phosphorus, and a simple substance sulfur. The $Li_2S$ that is used may be a substance that is produced and marketed industrially but may also be produced with the following methods. Specific examples include: a method of producing hydrous $Li_2S$ by reacting lithium hydroxide and hydrogen sulfide at 0 to 150°C in an aprotic organic solvent and then dehydrosulfurizing the reaction solution at 150 to 200°C (see Japanese Unexamined Patent Application Publication No. H7-330312A); a method of producing $Li_2S$ directly by reacting lithium hydroxide and hydrogen sulfide at 150 to 200°C in an aprotic organic solvent (see Japanese Unexamined Patent Application Publication No. H7-330312A); and a method of reacting lithium hydroxide and a gaseous sulfur source at a temperature of from 130 to 445°C (see Japanese Unexamined Patent Application Publication No. H9-283156A). The aforementioned $P_2S_5$ that is used may also be a substance that is produced and marketed industrially. In addition, a simple substance phosphorus and simple substance sulfur may also be used instead of $P_2S_5$. The simple substance phosphorus and simple substance sulfur that are used may also be substances that are produced and marketed industrially.

A $Li_2S-P_2S_5$ material can be produced with a melt-quenching method or a mechanical milling method using the aforementioned $P_2S_5$ and $Li_2S$. An electrolyte material obtained with these methods is a sulfurized glass and is amorphized. A solid electrolyte can be produced by mixing $P_2S_5$ and $Li_2S$ at a molar ratio of from 50:50 to 80:20, for example, and preferably from 60:40 to 75:25. In the case of melt-quenching, a mixture prepared in a pellet form with a mortar is placed in a carbon-coated quartz tube and vacuum-sealed. The mixture is then reacted for 0.1 to 12 hours at 400°C to 1,000°C. An amorphous solid electrolyte can be obtained by charging the obtained reaction product into ice and rapidly cooling the reaction product. In the case of a mechanical milling method, a reaction can be performed at room temperature. For example, an amorphous solid electrolyte can be obtained by performing treatment using a planetary ball mill for 0.5 to 100 hours at a revolution speed of from several tens to several hundreds of revolutions per minute.

A negative electrode mixture for an all-solid battery can be obtained by mixing the aforementioned carbonaceous material and the solid electrolyte. The mixing ratio of the carbonaceous material and the solid electrolyte is not limited as long as the effect of the present invention can be achieved, but the volume ratio is preferably from 20:80 to 80:20 and more preferably from 30:70 to 70:30. The negative electrode for an all-solid battery according to the present invention can be obtained by subjecting the obtained mixture of the carbonaceous material and the solid electrolyte to pressure molding, for example. A conventionally known method can be used for the pressure molding operation, and the pressure molding operation is not particularly limited. The pressure at the time of pressure molding is not particularly limited but may be from 0.5 to 600 MPa, for example, preferably from 1.0 to 600 MPa, and more preferably from 2.0 to 600 MPa.

Further, the negative electrode for an all-solid battery according to the present invention may contain negative electrode materials other than the aforementioned carbonaceous material as long as the effect of the present invention can be achieved. That is, when a carbonaceous material is used as a negative electrode in an all-solid battery having a negative electrode containing the aforementioned carbonaceous material and a positive electrode containing lithium, the negative electrode active material layer may contain graphite or an easily graphitizable carbonaceous material as long as the discharge capacity at 0 to 0.05 V on the basis of a lithium reference electrode is not less than 30 mAh/g.

(Expansion ratio)

The expansion ratio of the negative electrode for an all-solid battery according to the present invention is very small in comparison to the expansion ratio of a negative electrode for an all-solid battery using graphite or an easily graphitizable carbonaceous material. This is because the carbonaceous material used in the negative electrode for an all-solid battery according to the present invention has the physical properties described above. The expansion ratio of the negative electrode for an all-solid battery is not limited but is preferably not greater than 8%, more preferably not greater than 6%, and even more preferably not greater than 5%. The lower limit is not limited but may be not less than 0.5% and more preferably not less than 1%. If the expansion ratio exceeds 8%, the carbonaceous material expands at the time of Li insertion and contracts at the time of Li removal, which is not preferable in that it causes peeling at the interface between the carbonaceous material and the solid electrolyte and diminishes the electrochemical properties. On the other hand, if the expansion ratio is less than 0.5%, the true density of the carbonaceous material decreases and the energy capacity per unit volume becomes low since there are many fine pores in the carbonaceous material, which is not preferable.

The expansion ratio can be measured as follows. First, N-methylpyrrolidone is added to 94 parts by weight of the negative electrode material and 6 parts by weight of polyvinylidene fluoride, and this is formed into a pasty consistency, uniformly applied to copper foil, and dried to obtain an electrode with a diameter of 21 mm. The average interlayer spacing (A) of the (002) plane when not yet charged is measured by wide angle X-ray diffraction measurement. The material is charged to the charging capacity at the time of a full charge in accordance with the "Production of a test battery" and "Battery capacity measurement" of the working examples. A fully charged electrode is obtained by disassembling a coin-type battery, washing only an electrode of a carbonaceous material with dimethylcarbonate, removing the electrolyte solution, and then drying the electrode. This fully charged electrode is subjected to wide angle X-ray diffraction measurement while unexposed to the atmosphere so as to measure the average interlayer spacing (B) of the (002) plane at the time of a full charge. The expansion ratio is calculated with the following formula.

$$[\text{Expansion ratio}] = [(B/A)\times100]\text{-}100(\%)$$

(Electrode deformation ratio)

The negative electrode for an all-solid battery according to the present invention has an excellent electrode deformation ratio. That is, a negative electrode for an all-solid battery using a carbonaceous material having the physical properties described above has an extremely small electrode deformation ratio. The electrode deformation ratio of the negative electrode for an all-solid battery is not limited but is preferably not greater than 15% and more preferably not greater than 14.5%. The lower limit is preferably low and is therefore not particularly limited. Note that the electrode deformation ratio can be measured as follows.

First, 0.65 mL of a 50:50 (weight ratio) mixed sample of a carbonaceous material and a pseudo-solid electrolyte (potassium bromide) is placed in a $\varphi$10 and 3 cm tall cylindrical container, and pressure is applied from above with a $\varphi$10 cylindrical rod. The pressure is applied from 0 to 400 MPa. At this time, the height to the top of the rod at the time of 400 MPa of pressure is defined as A. The pressure is gradually released thereafter, and the height to the top of the rod at the time of 0 MPa is defined as B. The electrode deformation ratio is calculated with the following formula.

$$\text{Electrode deformation ratio} = [(B/A)\times100]\text{-}100$$

[2] All-solid battery

The all-solid battery of the present invention comprises the negative electrode for an all-solid battery described above. More specifically, the all-solid battery comprises a negative electrode active material layer, a positive electrode active material layer, and a solid electrolyte layer.

(Negative electrode active material layer)

The negative electrode active material layer contains the carbonaceous material and the solid electrolyte material described above and may further contain a conductivity agent and/or a binder. The mixing ratio of the carbonaceous material and the solid electrolyte in the negative electrode active material layer is not limited as long as the effect of the present invention can be achieved, but the volume ratio is preferably from 20:80 to 80:20 and more preferably from 30:70 to 70:30. In addition, the content of the carbonaceous material with respect to the negative electrode active material layer is preferably within the range of from 20 vol.% to 80 vol.% and is more preferably within the range of from 30 vol.% to 70 vol.%.

The negative electrode active material layer may contain negative electrode materials other than the aforementioned carbonaceous material as long as the effect of the present invention can be achieved. That is, when a carbonaceous material is used as a negative electrode in an all-solid battery having a negative electrode containing the aforementioned carbonaceous material and a positive electrode containing lithium, the negative electrode active material layer may contain graphite or an easily graphitizable carbonaceous material as long as the discharge capacity at 0 to 0.05 V on the basis of a lithium reference electrode is not less than 30 mAh/g.

The negative electrode active material layer may further contain a conductivity agent and/or a binder. An electrode having high conductivity can be produced by using the carbonaceous material of the present invention without particularly adding a conductivity agent, but a conductivity agent may be added as necessary for the purpose of imparting even higher conductivity. Examples of conductivity agents include acetylene black, Ketjen black, carbon nanofibers, carbon nanotubes, and carbon fibers. The content of the conductivity agent is not limited but may be from 0.5 to 15 wt.%, for example. An example of a binder is a fluorine-containing binder such as PTFE or PVDF. The content of the binder is not limited but may be from 0.5 to 15 wt.%, for example. The thickness of the negative electrode active material layer is not limited but is within the range of from 0.1 $\mu$m to 1,000 $\mu$m, for example.

The preparation method for the negative electrode active material layer is not particularly limited, but the negative electrode active material layer can be produced by mixing the carbonaceous material, the solid electrolyte material, and a conductivity agent and/or a binder as necessary and then pressure-molding the mixture. The negative electrode active material layer can also be produced by mixing the carbonaceous material, the solid electrolyte material, and a conductivity agent and/or a binder as necessary into a specific solvent to form a slurry and applying, drying, and then pressure-molding the mixture.

The negative electrode active material layer ordinarily has a current collector. SUS, copper, nickel, or carbon, for example, can be used as a negative electrode current collector, but of these, Cu or SUS is preferable.

(Positive electrode active material layer)

The positive electrode active material layer contains a positive electrode active material and a solid electrolyte material and may further contain a conductivity agent and/or a binder. The mixing ratio of the positive electrode active material and the solid electrolyte in the positive electrode active material layer is not limited and may be determined appropriately as long as the effect of the present invention can be achieved.

The positive electrode active material can be used without limiting the positive electrode active material used in the all-solid battery. For example, layered oxide-based (as represented by $LiMO_2$, where M is a metal such as $LiCoO_2$, $LiNiO_2$, $LiMnO_2$, or $LiNi_xCo_yMn_zO_2$ (where x, y, and z represent composition ratios)), olivine-based (as represented by $LiMPO_4$, where M is a metal such as $LiFePO_4$), and spinel-based (as represented by $LiM_2O_4$, where M is a metal such as $LiMn_2O_4$) complex metal chalcogen compounds are preferable, and these chalcogen compounds may be mixed as necessary.

The positive electrode active material layer may further contain a conductivity agent and/or a binder. Examples of conductivity agents include acetylene black, Ketjen black, and carbon fibers. The content of the conductivity agent is not limited but may be from 0.5 to 15 wt.%, for example. An example of a binder is a fluorine-containing binder such as PTFE or PVDF. The content of the conductivity agent is not limited but may be from 0.5 to 15 wt.%, for example. The thickness of the positive electrode active material layer is not limited but is within the range of from 0.1 μm to 1,000 μm, for example.

The preparation method for the positive electrode active material layer is not particularly limited, but the positive electrode active material layer can be produced by mixing the positive electrode active material, the solid electrolyte material, and a conductivity agent and/or a binder as necessary and then pressure-molding the mixture. The positive electrode active material layer can also be produced by mixing the positive electrode active material, the solid electrolyte material, and a conductivity agent and/or a binder as necessary into a specific solvent to form a slurry and applying, drying, and then pressure-molding the mixture.

The positive electrode active material layer ordinarily has a current collector. SUS, aluminum, nickel, iron, titanium, and carbon, for example, can be used as a positive electrode current collector, and of these, aluminum or SUS is preferable.

(Solid electrolyte layer)

The solid electrolyte layer contains the solid electrolyte described in the section "[1] Negative electrode for an all-solid battery" above.

The content of the solid electrolyte with respect to the solid electrolyte layer is not particularly limited but may be from 10 vol.% to 100 vol.%, for example, and is preferably from 50 vol.% to 100 vol.%.

The thickness of the solid electrolyte layer is also not particularly limited but may be from 0.1 μm to 1,000 μm, for example, and is preferably from 0.1 μm to 300 μm.

The preparation method for the solid electrolyte layer is not particularly limited, but the solid electrolyte layer can be produced by a gas phase method or a pressure molding method. The gas phase method is not limited, but a vacuum deposition method, a pulse laser deposition method, a laser abrasion method, an ion plating method, or a sputtering method may be used. As a pressure molding method, the solid electrolyte layer can be produced by mixing the solid electrolyte and a conductivity agent and/or a binder as necessary and pressure-molding the mixture. The solid electrolyte material layer can also be produced by mixing the solid electrolyte material and a conductivity agent and/or a binder as necessary into a specific solvent to form a slurry and applying, drying, and then pressure-molding the mixture.

(Production method)

The production method of the all-solid battery is not particularly limited, and a known production method for an all-solid battery may be used. For example, an all-solid battery can be obtained by pressure-molding a mixture prepared by mixing the material constituting the negative electrode active material layer, the material constituting the positive electrode active material layer, and the material constituting the solid electrolyte layer. The order of pressure molding is not particularly limited, but examples include an order of the negative electrode active material layer, the solid electrolyte layer, and then the positive electrode active material layer, an order of the positive electrode active material layer, the solid electrolyte layer, and then the negative electrode active material layer, an order of the solid electrolyte layer, the negative electrode active material layer, and then the positive electrode active material layer, and an order of the solid electrolyte layer, the positive electrode active material layer, and then the negative electrode active material layer.

[3] Discharge capacity increasing method

The method of the present invention for increasing the discharge capacity at an anode potential of from 0 to 0.05 V on the basis of a lithium reference electrode comprises the following steps of:

(1) producing an all-solid battery using a carbonaceous material having a true density of from 1.30 $g/cm^3$ to 1.70 $g/cm^3$ determined by a butanol method, and an average particle size $D_{v50}$ of from 1 to 50 $\mu m$ and an exothermic peak temperature T (°C) according to differential thermal analysis and a butanol true density $\rho_{Bt}$ ($g/cm^3$) satisfying the following formula (1): $300 \leq T-100 \times \rho_{Bt} \leq 570(1)$ as a negative electrode active material; and
(2) setting an anode potential of an obtained secondary battery to less than 0.05 V on the basis of a lithium reference electrode. That is, since the carbonaceous material used in the present invention has the physical properties described above, it is possible to improve the discharge capacity at an anode potential of from 0 to 0.05 V on the basis of a lithium reference electrode of the all-solid battery.

The carbonaceous material, the negative electrode active material, the positive electrode active material, the solid electrolyte, and the like described in the section "Negative electrode for an all-solid battery" or "All-solid battery" above can be used as the carbonaceous material, the negative electrode active material, the positive electrode active material, the solid electrolyte, and the like used in the method for increasing the discharge capacity according to the present invention.
An example of the all-solid battery used in the method for increasing the discharge capacity according to the present invention is a non-aqueous electrolyte secondary battery or an all-solid battery, but an all-solid battery is preferable.

Examples

The present invention will be described in detail hereafter using working examples, but these working examples do not limit the scope of the present invention. The measurement methods for the physical properties of the carbonaceous material for a non-aqueous electrolyte secondary battery according to the present invention (the "average interlayer spacing $d_{(002)}$ of the (002) plane and crystallite thickness $L_{c(002)}$ in the c-axis direction according to an X-ray diffraction method", the "specific surface area", the "true density determined by a butanol method", the "average particle size according to a laser diffraction method", "$^7$Li-NMR analysis", and "differential thermal analysis") will be described herein, but the physical properties described in this specification, including those in the working examples, are based on values determined by the following methods.

(Average interlayer spacing $d_{(002)}$ of the (002) plane and crystallite thickness $L_{c(002)}$ of the carbonaceous material)

A sample holder was filled with a carbonaceous material powder, and measurements were performed with a symmetrical reflection method using an X'Pert PRO manufactured by the PANalytical B.V. Under conditions with a scanning range of $8<2\theta<50°$ and an applied current/applied voltage of 45 kV/40 mA, an X-ray diffraction pattern was obtained using CuK$\alpha$ rays ($\lambda$=1.5418 Å) monochromated by an Ni filter as a radiation source. The correction of the diffraction pattern was not performed for the Lorentz polarization factor, absorption factor, or atomic scattering factor, and the diffraction angle was corrected using the diffraction line of the (111) surface of a high-purity silicon powder serving as a standard substance. The wavelength of the CuK$\alpha$ rays was set to 0.15418 nm, and $d_{(002)}$ was calculated by Bragg's equation $d_{(002)} = \lambda/2 \cdot \sin\theta$. In addition, the thickness $L_{c(002)}$ of crystallites in the c-axis direction was calculated with Scherrer's formula $L_{c(002)} = K\lambda/(\beta_{1/2} \cdot COS\theta)$ from a value $\beta$ determined by subtracting the half width of the (111) diffraction line of the silicon powder from the half width determined by a peak top method of the (002) diffraction line (setting the peak spread to $2\theta$ corresponding to the value of half of the peak strength). Here, calculations were made using the shape factor K=0.9.

(Specific Surface Area)

The specific surface area was measured in accordance with the method prescribed in JIS Z8830. A summary is given below.
A value $v_m$ was determined by a one-point method (relative pressure x=0.2) based on nitrogen adsorption at the temperature of liquid nitrogen using the approximation $v_m$=1/(v(1-x)) derived from the BET equation, and the specific area of the sample was calculated from the following formula:

$$\text{specific area} = 4.35 \times v_m \ (m^2/g)$$

(Here, $v_m$ is the amount of adsorption ($cm^3/g$) required to form a monomolecular layer on the sample surface; v is the amount of adsorption ($cm^3/g$) actually measured, and x is the relative pressure).

Specifically, the amount of adsorption of nitrogen in the carbonaceous substance at the temperature of liquid nitrogen was measured as follows using a "Flow Sorb II2300" manufactured by MICROMERITICS.

A test tube was filled with the carbon material, and the test tube was cooled to -196°C while infusing helium gas containing nitrogen gas at a concentration of 20 mol% so that the nitrogen was adsorbed in the carbon material. Next, the test tube was returned to room temperature. The amount of nitrogen desorbed from the sample at this time was measured with a thermal conductivity detector and used as the adsorption gas amount v.

(True density determined by butanol method)

Measurements were performed using butanol in accordance with the method prescribed in JIS R7212. A summary is given below.

The mass ($m_1$) of a pycnometer with a bypass line having an internal volume of approximately 40 mL was precisely measured. Next, after a sample was placed flat at the bottom of the pycnometer so as to have a thickness of approximately 10 mm, the mass ($m_2$) was precisely measured. Next, 1-butanol was slowly added to the pycnometer to a depth of approximately 20 mm from the bottom. Next, the pycnometer was gently oscillated, and after it was confirmed that no large air bubbles were formed, the pycnometer was placed in a vacuum desiccator and gradually evacuated to a pressure of 2.0 to 2.7 kPa. The pressure was maintained for 20 minutes or longer, and after the generation of air bubbles stopped, the bottle was removed and further filled with 1-butanol. After a stopper was inserted, the bottle was immersed in a constant-temperature bath (adjusted to $30 \pm 0.03$°C) for at least 15 minutes, and the liquid surface of 1-butanol was aligned with the marked line. Next, the pycnometer was removed, and after the outside of the pycnometer was thoroughly wiped and the pycnometer was cooled to room temperature, the mass ($m_4$) was precisely measured. Next, the same pycnometer was filled with 1-butanol alone and immersed in a constant-temperature water bath in the same manner as described above. After the marked line was aligned, the mass ($m_3$) was measured. In addition, distilled water which was boiled immediately before use and from which the dissolved gas was removed was placed in the pycnometer and immersed in a constant-temperature water bath in the same manner as described above. After the marked line was aligned, the mass (ms) was measured. The true density ($\rho_{Bt}$) is calculated using the following formula.

[Formula 1]

$$\rho_{Bt} = \frac{m_2 - m_1}{m_2 - m_1 - (m_4 - m_3)} \times \frac{m_3 - m_1}{m_5 - m_1} d$$

(Here, d is the specific gravity (0.9946) in water at 30°C)

(Average Particle Size)

Three drops of a dispersant (cationic surfactant "SN-WET 366" (manufactured by the San Nopco Co.)) were added to approximately 0.1 g of a sample, and the dispersant was blended into the sample. Next, 30 mL of purified water was added, and after the sample was dispersed for approximately 2 minutes with an ultrasonic washer, the particle size distribution within the particle size range of 0.50 to 3,000 $\mu$m was determined with a particle size distribution measurement device ("SALD-3000J" manufactured by the Shimadzu Corporation).

The average particle size $D_{v50}$ ($\mu$m) was determined from the resulting particle size distribution as the particle size yielding a cumulative volume of 50%.

($^7$Li-NMR analysis)

(1) Production of carbon electrode (positive electrode) and lithium negative electrode First, N-methyl-2-pyrrolidone was added to 90 parts by weight of a carbonaceous material powder and 10 parts by weight of polyvinylidene fluoride, and this was formed into a pasty consistency and uniformly applied to copper foil. After the sample was dried, the sample was peeled from the copper foil and stamped into a disc shape with a diameter of 21 mm, and this was pressed with a pressure of approximately 500 MPa to form a positive electrode. The amount of the carbonaceous material in the positive electrode was adjusted to approximately 40 mg. A sample in which a thin sheet of metallic lithium having a thickness of 1 mm was stamped into a disc shape with a diameter of 21 mm was used for the negative electrode.

(2) $^7$Li-NMR analysis

A non-aqueous solvent-based lithium secondary battery was formed by using the carbon electrode (positive electrode) and the lithium negative electrode described above, using a substance in which $LiPF_6$ is added at a ratio of 1.5 mol/liter to a mixed solvent prepared by mixing ethylene carbonate, dimethylcarbonate, and methyl ethyl carbonate at a volume ratio of 1:2:2 as an electrolyte solution, and using a polypropylene fine porous membrane as a separator, and the carbonaceous material was doped with lithium by charging the non-aqueous solvent-based lithium secondary battery with a constant current having a current density of 0.2 mA/cm[2] until the amount of electricity reached 600 mAh/g (carbonaceous material).

After doping was completed, the material was left to stand for two hours. The carbon electrode was then removed in an argon atmosphere, and a sample tube for NMR measurement was filled with the entire carbon electrode (positive electrode) from which the electrolyte solution was wiped. NMR analysis was performed by means of a MAS-$^7$Li-NMR measurement with a JNM-EX270 manufactured by JEOL Ltd. At the time of measurement, LiCl was measured as a reference substance, and this was set to 0 ppm.

(Differential thermal analysis)

Differential thermal analysis was performed under a dry air flow using a DTG-60H manufactured by the Shimadzu Corporation. The analysis conditions were such that a 2 mg sample was analyzed under a 100 mL/min air flow at a heating rate of 10°C/min. The exothermic peak temperature was read from the differential thermal curve.

Production Example 1

First, 70 kg of a petroleum pitch with a softening point of 205°C, an H/C atomic ratio of 0.65, and a quinoline insoluble content of 0.4% and 30 kg of naphthalene were charged into a pressure-resistant container with an internal volume of 300 liters and having a stirring blade and an outlet nozzle, and the substances were melted and mixed for 1 to 2 hours while heating at 190°C. The heat-melted and mixed petroleum pitch was then cooled to approximately 100°C, and the inside of the pressure-resistant container was pressurized by nitrogen gas. The content was extruded from the outlet nozzle to obtain a string-shaped compact with a diameter of approximately 500 μm. Next, this string-shaped compact was pulverized so that the ratio (L/D) of the diameter (D) and the length (L) was approximately 1.5 to 2.0, and the resulting pulverized product was added to an aqueous solution in which 0.53 mass% of polyvinyl alcohol (degree of saponification: 88%) heated to 93°C is dissolved, dispersed while stirring, and cooled to obtain a spherical pitch compact slurry. After most of the water was removed by filtration, the naphthalene in the pitch compact was extracted with n-hexane with a weight approximately six times that of the spherical pitch compact and removed. Using a fluidized bed, the porous spherical pitch obtained in this manner was heated to 230°C and held for 1 hour at 230°C while hot air was passed through to oxidize, thereby producing heat-infusible porous spherical oxidized pitch.

Next, 100 g of the oxidized pitch was placed in a vertical tubular furnace with an inside diameter of 50 mm and a height of 900 mm, and this was heated to 550°C while infusing nitrogen gas at atmospheric pressure from the lower part of the device at a flow rate of 5 NL/min. This was held for one hour at 550°C and subjected to pre-calcination to obtain a carbonaceous material precursor. Next, 200 g of the obtained carbonaceous material precursor pitch was pulverized for 20 minutes with a jet mill (AIR JET MILL made by Hosokawa Micron Co., Ltd.; MODEL 100AFG) at a pulverization pressure of 3.92 bar (4.0 kgf/cm[2]) and a rotor revolution speed of 4,500 rpm to form a pulverized carbon precursor with an average particle size of approximately 20 μm. The jet mill that was used was equipped with a classifier. Next, 10 g of the pulverized carbonaceous material precursor was placed in a horizontal tubular furnace with a diameter of 100 mm and heated to 1,200°C at a heating rate of 250°C/h. This was held for one hour at 1,200°C and subjected to main calcination to prepare a carbonaceous material 1. Main calcination was performed in a nitrogen atmosphere with a flow rate of 10 L/min.

Production Example 2

A carbonaceous material 2 was obtained by repeating the operations of Production Example 1 with the exception that in the oxidation of the porous spherical pitch, the temperature of the heating air was set to 260°C and held for one hour, and that the material was prepared so as to have a specific surface area of 2.9 m$^2$/g, an average particle size of 21.0 $\mu$m, and a $\rho_{Bt}$ of 1.52. Physical properties of the resulting carbonaceous materials are shown in Table 1.

Production Example 3

A carbonaceous material 3 was obtained by repeating the operations of Production Example 1 with the exception that in the oxidation of the porous spherical pitch, the temperature of the heating air was set to 280°C and held for one hour, that the main calcination temperature was set to 1,050°C, and that the material was prepared so as to have a specific surface area of 3.2 m$^2$/g, an average particle size of 20.6 $\mu$m, and a $\rho_{Bt}$ of 1.52. Physical properties of the resulting carbonaceous materials are shown in Table 1.

Production Example 4

A carbonaceous material 4 was obtained by repeating the operations of Production Example 1 with the exception that in the oxidation of the porous spherical pitch, the temperature of the heating air was set to 280°C and held for one hour, that the main calcination temperature was set to 1,100°C, and that the material was prepared so as to have a specific surface area of 3.1 m$^2$/g, an average particle size of 21.3 $\mu$m, and a $\rho_{Bt}$ of 1.52. Physical properties of the resulting carbonaceous materials are shown in Table 1.

Production Example 5

A carbonaceous material 5 was obtained by repeating the operations of Production Example 1 with the exception that in the oxidation of the porous spherical pitch, the temperature of the heating air was set to 280°C and held for one hour, that the main calcination temperature was set to 1,200°C, and that the material was prepared so as to have a specific surface area of 2.7 m$^2$/g, an average particle size of 20.5 $\mu$m, and a $\rho_{Bt}$ of 1.52. Physical properties of the resulting carbonaceous materials are shown in Table 1.

Production Example 6

A carbonaceous material 6 was obtained by repeating the operations of Production Example 1 with the exception that in the oxidation of the porous spherical pitch, the temperature of the heating air was set to 290°C and held for one hour, that the main calcination temperature was set to 1,200°C, and that the material was prepared so as to have a specific surface area of 3.1 m$^2$/g, an average particle size of 19.7 $\mu$m, and a $\rho_{Bt}$ of 1.52. Physical properties of the resulting carbonaceous materials are shown in Table 1.

Production Example 7

A carbonaceous material 7 was obtained by repeating the operations of Production Example 1 with the exception that in the oxidation of the porous spherical pitch, the temperature of the heating air was set to 210°C and held for one hour, that the main calcination temperature was set to 1,200°C, and that the material was prepared so as to have a specific surface area of 5.5 m$^2$/g, an average particle size of 12.2 $\mu$m, and a $\rho_{Bt}$ of 1.63. Physical properties of the resulting carbonaceous materials are shown in Table 1.

Production Example 8

A carbonaceous material 8 was obtained by repeating the operations of Production Example 1 with the exception that in the oxidation of the porous spherical pitch, the temperature of the heating air was set to 230°C and held for one hour, that the main calcination temperature was set to 1,200°C, and that the material was prepared so as to have a specific surface area of 7.5 m$^2$/g, an average particle size of 10.4 $\mu$m, and a $\rho_{Bt}$ of 1.57. Physical properties of the resulting carbonaceous materials are shown in Table 1.

Production Example 9

A carbonaceous material 9 was obtained by repeating the operations of Production Example 1 with the exception that in the oxidation of the porous spherical pitch, the temperature of the heating air was set to 260°C and held for one hour, that the main calcination temperature was set to 1,200°C, and that the material was prepared so as to have a specific surface area of 6.2 m$^2$/g, an average particle size of 9.6 $\mu$m, and a $\rho_{Bt}$ of 1.52. Physical properties of the resulting carbonaceous materials are shown in Table 1.

Production Example 10

A carbonaceous material 10 was obtained by repeating the operations of Production Example 1 with the exception that in the oxidation of the porous spherical pitch, the temperature of the heating air was set to 320°C and held for one hour, that the main calcination temperature was set to 1,200°C, and that the material was prepared so as to have a specific surface area of 9.6 m$^2$/g, an average particle size of 11.5 $\mu$m, and a $\rho_{Bt}$ of 1.48. Physical properties of the resulting carbonaceous materials are shown in Table 1.

Production Example 11

A carbonaceous material 11 was obtained by repeating the operations of Production Example 1 with the exception that in the oxidation of the porous spherical pitch, the temperature of the heating air was set to 240°C and held for one hour, that the main calcination temperature was set to 1,200°C, that the flow rate at the time of main calcination was set to approximately 1 to 2 L/min, and that the material was prepared so as to have a specific surface area of 10.0 m$^2$/g, an average particle size of 5.8 $\mu$m, and a $\rho_{Bt}$ of 1.57. Physical properties of the resulting carbonaceous materials are shown in Table 1.

Production Example 12

A carbonaceous material 12 was obtained by repeating the operations of Production Example 1 with the exception that in the oxidation of the porous spherical pitch, the temperature of the heating air was set to 260°C and held for one hour, and that the material was prepared so as to have a specific surface area of 1.8 m$^2$/g, an average particle size of 29.5 $\mu$m, and a $\rho_{Bt}$ of 1.52. Physical properties of the resulting carbonaceous materials are shown in Table 1.

Production Example 13

In this production example, a carbonaceous material was prepared using a phenol resin as a carbon source.

(1) Phenol resin production

First, 32 g of paraformaldehyde, 242 g of ethylcellosolve, and 10 g of sulfuric acid were added to 108 g of o-cresol, and after the mixture was reacted for three hours at 115°C, the reaction solution was neutralized by adding 17 g of sodium hydrogen carbonate and 30 g of water. The obtained reaction solution was charged into 2 liters of water stirred at a high speed to obtain a novolac resin. Next, 17.3 g of the novolac resin and 2.0 g of hexamine were kneaded at 120°C and heated for two hours at 250°C in a nitrogen gas atmosphere to form a cured resin.

(2) Production of a Carbonaceous Material

After the obtained cured resin was roughly pulverized, the resin was subjected to pre-calcination for one hour at 600°C in a nitrogen atmosphere (atmospheric pressure) and further heat-treated for one hour at 1,200°C in an argon gas atmosphere (atmospheric pressure) to obtain a carbonaceous material. The obtained carbonaceous material was further pulverized to adjust the average particle size to 22.8 $\mu$m, and a carbonaceous material 13 was thereby obtained.

Production Example 14

In this production example, a carbonaceous material having a butanol true density of 1.33 g/cm$^3$ was prepared. First, 70 kg of a petroleum pitch with a softening point of 205°C and a quinoline insoluble content of 0.4% and 30 kg of naphthalene were charged into a pressure-resistant container with an internal volume of 300 liters and having a stirring blade and an outlet nozzle, and the substances were melted and mixed while heating. After the heat-melted and mixed petroleum pitch was then cooled, the petroleum pitch was pulverized, and the obtained pulverized product was charged into water at 90 to 100°C, dispersed while stirring, and cooled to obtain a spherical pitch compact. After most of the water was removed by filtration, the naphthalene in the spherical pitch compact was extracted with n-hexane and removed. A porous spherical pitch obtained as described above was subjected to heating and oxidation while being passed through heated air, and heat-infusible porous spherical oxidized pitch was thus obtained. The oxygen crosslinking degree of the porous spherical oxidized pitch was 6 wt.%.
Next, 200 g of the infusible porous spherical oxidized pitch was pulverized for 20 minutes with a jet mill (AIR JET MILL manufactured by Hosokawa Micron Co., Ltd.; MODEL 100AFG) to form a pulverized carbonaceous material precursor with an average particle size of from 20 to 25 $\mu$m. After the obtained pulverized carbonaceous material precursor was impregnated with a sodium hydroxide (NaOH) aqueous solution in a nitrogen atmosphere, the precursor was subjected to heated dehydration under reduced pressure to obtain a pulverized carbonaceous material precursor loaded with 30.0 wt.% of NaOH with respect to the pulverized carbonaceous material precursor. Next, 10 g of the pulverized carbonaceous material precursor loaded with NaOH (in terms of the mass of the pulverized carbon precursor) was placed in a horizontal tubular furnace and subjected to pre-calcination by holding the precursor for ten hours at 600°C in a nitrogen atmosphere. The precursor was further heated to 1,200°C at a heating rate of 250°C/h and subjected to main calcination to obtain calcined carbon. Main calcination was performed in a nitrogen atmosphere with a flow rate of 10 L/min. Next, 5 g of the obtained calcined carbon was placed in a quartz reaction tube and heated and held at 750°C under a nitrogen gas air flow. The calcined carbon was then coated with pyrolytic carbon by replacing the nitrogen gas flowing into the reaction tube with a mixed gas of cyclohexane and nitrogen gas. The infusion rate of cyclohexane was 0.3 g/min, and after infusion for 30 minutes, the supply of cyclohexane was stopped. After the gas inside the reaction tube was replaced with nitrogen, the sample was allowed to cool to obtain a carbonaceous material 14. Note that the average particle size of the obtained carbonaceous material was 19 $\mu$m.

Comparative Production Example 1

A comparative carbonaceous material was obtained by repeating the operations of Production Example 1 with the exception that in the oxidation of the porous spherical pitch, the temperature of the heating air was set to 165°C and held for one hour, that the main calcination temperature was set to 1,800°C, and that the material was prepared so as to have an average particle size of 25.0 $\mu$m, and a $\rho_{Bt}$ of 2.13. Physical properties of the resulting carbonaceous material are shown in Table 1.

Comparative Production Example 2

A comparative carbonaceous material 2 was obtained by repeating the operations of Production Example 1 with the exception that in the oxidation of the porous spherical pitch, the temperature of the heating air was set to 210°C and held for one hour, and that the material was prepared so as to have a specific surface area of 57.7 $m^2$/g and an average particle size of 10.0 $\mu$m. Physical properties of the resulting carbonaceous materials are shown in Table 1.

Comparative Production Example 4

A comparative carbonaceous material 4 was obtained by repeating the operations of Production Example 1 with the exception that in the oxidation of the porous spherical pitch, the temperature of the heating air was set to 250°C and held for one hour, that the main calcination temperature was set to 2,000°C, and that the material was prepared so as to have a specific surface area of 2.8 $m^2$/g and an average particle size of 15.2 $\mu$m. Physical properties of the resulting carbonaceous materials are shown in Table 1.

Table 1

| | Specific surface area ($m^2$/g) | Average particle size $D_{v50}$ ($\mu$m) | True density $\rho_{Bt}$ ($g/cm^3$) | Calcination peak T (°C) | T-100$\times\rho_{Bt}$ | Average interlayer spacing $d_{(002)}$ | Crystallite thickness $L_{c(002)}$ | $^7$Li-NMR Knight shift (ppm) |
|---|---|---|---|---|---|---|---|---|
| Working Example 1 | 2.0 | 20.4 | 1.57 | 660 | 503 | 0.383 | 1.2 | 115 |
| Working Example 2 | 2.9 | 21.0 | 1.52 | 654 | 502 | 0.386 | 1.1 | 118 |
| Working Example 3 | 3.2 | 20.6 | 1.52 | 618 | 466 | 0.389 | 1.0 | 98 |
| Working Example 4 | 3.1 | 21.3 | 1.52 | 639 | 487 | 0.386 | 1.1 | 99 |
| Working Example 5 | 2.7 | 20.5 | 1.52 | 650 | 498 | 0.386 | 1.1 | 119 |
| Working Example 6 | 3.1 | 19.7 | 1.52 | 645 | 493 | 0.389 | 1.1 | 120 |

(continued)

| | Specific surface area (m$^2$/g) | Average particle size D$_{v50}$ (µm) | True density $\rho_{Bt}$ (g/cm$^3$) | Calcination peak T (°C) | T-100×$\rho$ Bt | Average interlayer spacing d$_{(002)}$ | Crystallite thickness L$_{c(002)}$ | $^7$Li-NMR Knight shift (ppm) |
|---|---|---|---|---|---|---|---|---|
| Working Example 7 | 5.5 | 12.2 | 1.63 | 663 | 500 | 0.376 | 1.3 | 110 |
| Working Example 8 | 7.5 | 10.4 | 1.57 | 650 | 493 | 0.383 | 1.2 | 115 |
| Working Example 9 | 6.2 | 9.6 | 1.52 | 648 | 496 | 0.386 | 1.2 | 118 |
| Working Example 10 | 9.6 | 11.5 | 1.48 | 644 | 496 | 0.387 | 1.2 | 120 |
| Working Example 11 | 10.0 | 5.8 | 1.57 | 650 | 493 | 0.386 | 1.2 | 115 |
| Working Example 12 | 1.8 | 29.5 | 1.52 | 645 | 493 | 0.386 | 1.2 | 118 |
| Working Example 13 | 0.3 | 22.8 | 1.41 | 639 | 498 | 0.393 | 1.1 | 103 |
| Working Example 14 | 2.7 | 19.0 | 1.33 | 464 | 331 | 0.387 | 1.0 | 140 |
| Comparative Example 1 | 4.0 | 25.0 | 2.13 | 824 | 611 | 0.350 | 11.1 | 26 |
| Comparative Example 2 | 57.7 | 10.0 | 1.45 | 554 | 409 | 0.376 | 11.2 | 10 |
| Comparative Example 3 | 4.4 | 20.6 | 2.26 | 811 | 585 | 0.336 | 35.0 | 44 |
| Comparative Example 4 | 2.8 | 15.2 | 1.65 | 850 | 685 | 0.383 | 1.1 | - |

(Working Examples 1 to 14 and Comparative Examples 1 to 4)

Electrolyte batteries were produced using the carbonaceous materials 1 to 14 obtained in Production Examples 1 to 14, the comparative carbonaceous materials 1, 2, and 4 obtained in Comparative Production Examples 1, 2, and 4, and natural graphite produced in Loyang, China (Comparative Example 3).

(Production of test battery)

Although the carbonaceous materials obtained in Production Examples 1 to 14 are suitable for forming an anode for a secondary battery, in order to precisely evaluate the discharge capacity (de-doping capacity) and the irreversible capacity (non-de-doping capacity) of the battery active material without being affected by fluctuation in the performances of the counter electrode, a lithium secondary battery was formed together with a counter electrode comprising lithium metal with stable characteristics, and the characteristics thereof were evaluated.
A negative electrode was produced by adding N-methyl-2-pyrrolidone to 94 parts by weight of each carbonaceous material and 6 parts by weight of polyvinylidene fluoride, forming the mixture into a pasty consistency, applying the mixture uniformly to a copper foil, drying the sample, peeling the sample from the copper foil, and then stamping the sample into a disc shape with a diameter of 15 mm to form an electrode. The lithium electrode was prepared inside a glove box in an Ar atmosphere. An electrode (counter electrode) was formed by spot-welding a stainless steel mesh disc with a diameter of 16 mm on the outer lid of a 2016 coin type test cell in advance, punching a thin sheet of metal lithium with a thickness of 0.8 mm into a disc shape with a diameter of 15 mm, and pressing the thin sheet of metal lithium into the stainless steel mesh disc.

Using a pair of electrodes produced in this way, $LiPF_6$ was added at a proportion of 1.4 mol/L to a mixed solvent prepared by mixing ethylene carbonate, dimethyl carbonate, and methyl ethyl carbonate at a volume ratio of 1:2:2 as an electrolyte solution. A polyethylene gasket was used as a fine porous membrane separator made of borosilicate glass fibers with a diameter of 19 mm to assemble a 2016 coin-type non-aqueous electrolyte lithium secondary battery in an Ar glove box.

(Measurement of battery capacity)

Charge-discharge tests were performed on a lithium secondary battery with the configuration described above using a charge-discharge tester ("TOSCAT" manufactured by Toyo System Co., Ltd.). A lithium doping reaction for inserting lithium into the carbon electrode was performed with a constant-current/constant-voltage method, and a de-doping reaction was performed with a constant-current method. Here, in a battery using a lithium chalcogen compound for the cathode, the doping reaction for inserting lithium into the carbon electrode is called "charging", and in a battery using lithium metal for a counter electrode, as in the test battery of the present invention, the doping reaction for the carbon electrode is called "discharging". The manner in which the doping reactions for inserting lithium into the same carbon electrode thus differs depending on the pair of electrodes used. Therefore, the doping reaction for inserting lithium into the carbon electrode will be described as "charging" hereafter for the sake of convenience. Conversely, "discharging" refers to a charging reaction in the test battery but is described as "discharging" for the sake of convenience since it is a de-doping reaction for removing lithium from the carbon material. The charging method used here is a constant-current/constant-voltage method. Specifically, constant-current charging was performed at 0.5 mA/cm$^2$ until the terminal voltage reached 0 V. After the terminal voltage reached 0 V, constant-voltage charging was performed at a terminal voltage of 0 V, and charging was continued until the current value reached 20 μA. At this time, a value determined by dividing the electricity supply by the weight of the carbon material of the electrode is defined as the charge capacity per unit weight of the carbon material (mAh/g). After the completion of charging, the battery circuit was opened for 30 minutes, and discharging was performed thereafter. Discharging was performed at a constant current of 0.5 mA/cm$^2$ until the final voltage reached 1.5 V. At this time, a value determined by dividing the electrical discharge by the weight of the carbon material of the electrode is defined as the discharge capacity per unit weight of the carbon material (mAh/g). The irreversible capacity was calculated as the discharge capacity subtracted from the charge capacity.
The charge/discharge capacities and irreversible capacity were determined by averaging 3 measurements for test batteries produced using the same sample. The results are shown in Table 2.

(Measurement of expansion ratio)

The expansion ratios at the time of charging were measured for anodes produced using the carbonaceous materials 1 to 14 obtained in Production Examples 1 to 14, the comparative carbonaceous materials 1, 2, and 4 obtained in Comparative Production Examples 1, 2, and 4, and natural graphite produced in Loyang, China (Comparative Example 3).
The expansion ratio was measured with the following method.
First, N-methyl-2-pyrrolidone was added to 94 parts by weight of each carbonaceous material and 6 parts by weight of polyvinylidene fluoride, and this was formed into a pasty consistency and uniformly applied to copper foil. After the sample was dried, the sample was peeled from the copper foil and stamped into a disc shape with a diameter of 15 mm to form an electrode. The obtained electrode was subjected to wide angle X-ray diffraction measurement in accordance with the method described in "Average interlayer spacing $d_{(002)}$ and crystallite thickness $L_{c(002)}$" above to achieve an average interlayer spacing $d_{(002)}$ (A) in an uncharged state.
The charge/discharge capacity was measured in accordance with the "Test battery production" and "Battery capacity measurement" above. A coin-type battery charged to the full charge capacity was disassembled, and only an electrode of a carbonaceous material was washed with dimethylcarbonate. After the electrolyte solution was removed, the sample was dried to obtain a fully charged electrode. The fully charged electrode was subjected to wide angle X-ray diffraction measurement in accordance with the method described in "Average interlayer spacing $d_{(002)}$ and crystallite thickness $L_{c(002)}$" above, and the $d_{(002)}$ (B) at the time of a full charge was calculated. The expansion ratio was calculated with the following formula.

$$[\text{Expansion ratio}] = [(B/A) \times 100] - 100 (\%)$$

The results are shown in Table 2.

(Discharge capacity in a battery voltage range of from 0 to 0.05 V on the basis of a lithium reference electrode using a carbonaceous material as a negative electrode)

The discharge capacity in a battery voltage range of from 0 to 0.05 V was measured on the basis of a lithium reference electrode using a carbonaceous material as a negative electrode in accordance with the "Test battery production" and "Battery capacity measurement" above for the carbonaceous materials 1 to 14 obtained in Production Examples 1 to 14, the comparative carbonaceous materials 1 and 2 obtained in Comparative Production Examples 1 and 2, and natural graphite produced in Loyang, China (Comparative Example 3).
The results are shown in Table 2.

Table 2

| | In uncharged state d$_{(002)}$ A | In fully charged state d$_{(002)}$ B | Expansion ratio ((B/A)×100)-100 | Charge capacity | Discharge capacity | Irreversible capacity | Efficiency | Battery voltage range at the time of discharge Capacity at 0 to 0.05 V |
|---|---|---|---|---|---|---|---|---|
| | nm | nm | % | mAh/g | mAh/g | mAh/g | % | mAh/g |
| Working Example 1 | 0.383 | 0.389 | 1.5 | 515 | 458 | 57 | 88.9 | 71 |
| Working Example 2 | 0.386 | 0.392 | 1.6 | 491 | 436 | 55 | 88.8 | 83 |
| Working Example 3 | 0.389 | 0.395 | 1.5 | 605 | 491 | 114 | 81.2 | 46 |
| Working Example 4 | 0.386 | 0.392 | 1.5 | 583 | 491 | 92 | 84.2 | 45 |
| Working Example 5 | 0.386 | 0.392 | 1.5 | 512 | 452 | 60 | 88.3 | 75 |
| Working Example 6 | 0.389 | 0.395 | 1.5 | 532 | 464 | 68 | 87.2 | 64 |
| Working Example 7 | 0.376 | 0.390 | 3.6 | 458 | 407 | 51 | 88.9 | 95 |
| Working Example 8 | 0.383 | 0.389 | 1.6 | 518 | 451 | 67 | 87.1 | 69 |
| Working Example 9 | 0.386 | 0.392 | 1.6 | 551 | 473 | 78 | 85.8 | 100 |
| Working Example 10 | 0.387 | 0.393 | 1.5 | 571 | 481 | 90 | 84.2 | 89 |
| Working Example 11 | 0.386 | 0.392 | 1.5 | 474 | 409 | 65 | 86.3 | 92 |
| Working Example 12 | 0.386 | 0.392 | 1.6 | 491 | 429 | 62 | 87.4 | 59 |
| Working Example 13 | 0.393 | 0.420 | 1.1 | 568 | 429 | 139 | 75.5 | 65 |

|  | In uncharged state $d_{(002)}$ A | In fully charged state $d_{(002)}$ B | Expansion ratio ((B/A) ×100)-100 | Charge capacity | Discharge capacity | Irreversible capacity | Efficiency | Battery voltage range at the time of discharge Capacity at 0 to 0.05 V |
|---|---|---|---|---|---|---|---|---|
|  | nm | nm | % | mAh/g | mAh/g | mAh/g | % | mAh/g |
| Working Example 14 | 0.386 | 0.392 | 1.3 | 729 | 628 | 101 | 86.2 | 343 |
| Comparative Example 1 | 0.350 | 0.382 | 9.2 | 304 | 228 | 76 | 75.0 | 20 |
| Comparative Example 2 | 0.376 | 0.390 | 3.6 | 860 | 554 | 306 | 64.4 | 5 |
| Comparative Example 3 | 0.336 | 0.372 | 11.0 | 395 | 364 | 31 | 92.2 | 1 |
| Comparative Example 4 | 0.383 | 0.389 | 1.6 | 159 | 136 | 23 | 85.5 | 2 |

As shown in Table 2, the secondary batteries obtained in Working Examples 1 to 14 yielded a better discharge capacity at 0 to 0.05 V on the basis of a lithium reference electrode using a carbonaceous material as a negative electrode than that of the non-aqueous electrolyte secondary batteries obtained in Comparative Examples 1 to 3.

(All-solid electrode production example)

An all-solid electrode was produced using the non-graphitizable carbonaceous materials of Working Examples 1 to 11 and Comparative Example 4 and a pseudo-solid electrolyte (potassium bromide). First, 0.65 mL of a 50:50 (weight ratio) mixed sample of a carbonaceous material and a pseudo-solid electrolyte (potassium bromide) was placed in a φ10 and 3 cm tall cylindrical container, and the sample was pressure molded.
The electrode deformation rate of the all-solid electrode was simultaneously measured. Pressure is applied from above with a φ10 cylindrical rod. The pressure is applied from 0 to 400 MPa. At this time, the height to the top of the rod at the time of 400 MPa of pressure is defined as A. The pressure is gradually released thereafter, and the height to the top of the rod at the time of 0 MPa is defined as B. The electrode deformation ratio is calculated with the following formula.

$$\text{Electrode deformation ratio} = [(B/A)\times100]-100$$

The results are shown in Table 3.

Table 3

|  | Electrode deformation ratio (%) |
|---|---|
| Working Example 1 | 12.6 |
| Working Example 2 | 12.6 |
| Working Example 3 | 12.5 |
| Working Example 4 | 12.6 |
| Working Example 5 | 12.8 |
| Working Example 6 | 12.7 |
| Working Example 7 | 14.0 |
| Working Example 8 | 14.5 |
| Working Example 9 | 14.5 |
| Working Example 10 | 13.0 |
| Working Example 11 | 13.5 |
| Comparative Example 4 | 15.4 |

Whereas the electrode deformation ratio was 15.4% in the non-graphitizable carbonaceous material of Comparative Example 4, the electrode deformation was excellent and low at 12.6%, 12.6%, 12.5%, 12.6%, 12.8%, and 12.7% in Working Examples 1 to 6 of non-graphitizable carbonaceous materials having specific physical properties, 14.0%, 14.5%, 14.5%, and 13.0% in Working Examples 7 to 10, and 13.5% in Working Example 11.

Industrial Applicability

The negative electrode for an all-solid battery and an all-solid battery containing the same according to the present invention have high energy density and can therefore be suitably used in hybrid electric vehicles (HEV), plug-in hybrid electric vehicles (PHEV), and electric vehicles (EV).
The present invention has been described above using specific modes of embodiment, but modifications and improvements apparent to persons having ordinary skill in the art are also included in the scope of the present invention.

**Claims**

1.  A negative electrode for an all-solid-state battery comprising:

    a carbonaceous material having a true density of from 1.30 g/cm$^3$ to 1.70 g/cm$^3$ determined by a butanol method, a specific surface area of from 0.5 to 50.0 m$^2$/g, an average particle size $D_{v50}$ of from 1 to 50 $\mu$m, and a exothermic peak temperature T (°C) according to differential thermal analysis and a butanol true density $\rho_{Bt}$ (g/cm$^3$) satisfying the following formula (1):

$$300 \leq T\text{-}100 \times \rho_{Bt} \leq 570 \quad (1)$$

    and
    a solid electrolyte.

2.  The negative electrode for an all-solid-state battery according to claim 1, wherein the carbonaceous material has a main peak of resonance signals observed in a range of from 80 to 200 ppm on a low magnetic field side with a LiCl resonance signal defined as 0 ppm when electrochemically doped with lithium and subjected to $^7$Li-NMR analysis.

3.  The negative electrode for an all-solid-state battery according to any one of claims 1 or 2, wherein a carbon source of the carbonaceous material is an organic material derived from petroleum or coal, a thermoplastic resin, or a thermosetting resin.

4.  An all-solid-state battery containing the negative electrode for all-solid-state battery described in any one of claims 1 or 2.

5.  A method for increasing a discharge capacity in a battery voltage range of from 0 to 0.05 V comprising the steps of:

    (1) producing an all-solid battery using a carbonaceous material having a true density of from 1.30 g/cm$^3$ to 1.70 g/cm$^3$ determined by a butanol method, and an average particle size $D_{v50}$ of from 1 to 50 $\mu$m, and an exothermic peak temperature T (°C) according to differential thermal analysis and a butanol true density $\rho_{Bt}$ (g/cm$^3$) satisfying the following formula (1):

$$300 \leq T\text{-}100 \times \rho_{Bt} \leq 570 \quad (1)$$

    as a negative electrode active material; and
    (2) setting an anode potential of an obtained secondary battery to less than 0.05 V on the basis of a lithium reference electrode.

6.  The all-solid-state battery according to claim 4, having a positive electrode active material equivalent to not less than 500 Ah/kg per unit weight of the negative electrode active material.

**Patentansprüche**

1.  Negativelektrode für eine Festkörperbatterie, umfassend:

    ein kohlenstoffhaltiges Material, das eine wahre Dichte von 1,30 g/cm$^3$ bis 1,70 g/cm$^3$, durch eine Butanol-Methode ermittelt, eine spezifische Oberfläche von 0,5 bis 50,0 m$^2$/g, eine mittlere Korngröße $D_{v50}$ von 1 bis 50 $\mu$m und eine exotherme Spitzentemperatur T (°C) nach einer Differentialthermoanalyse und einer wahren Butanol-Dichte $\rho_{Bt}$ (g/cm$^3$), die die folgende Formel (1) erfüllt:

$$300 \leq T\text{-}100x\rho_{Bt} \leq 570 \quad (1)$$

    aufweist, und

einen Festelektrolyten.

2. Negativelektrode für eine Festkörperbatterie nach Anspruch 1, wobei das kohlenstoffhaltige Material eine hauptsächliche Spitze der beobachteten Resonanzsignale in einem Bereich von 80 bis 200 ppm auf einer schwachen Magnetfeldseite aufweist, wobei ein LiCl-Resonanzsignal als 0 ppm definiert ist, wenn es elektrochemisch mit Lithium dotiert ist und einer $^7$Li-NMR-Analyse unterzogen wird.

3. Negativelektrode für eine Festkörperbatterie nach einem der Ansprüche 1 oder 2, wobei eine Kohlenstoffquelle des kohlenstoffhaltigen Materials ein organisches Material ist, das von Erdöl oder Kohle abstammt, ein thermoplastisches Harz oder ein warm härtbares Harz ist.

4. Festkörperbatterie, umfassend die Negativelektrode für eine Festkörperbatterie nach einem der Ansprüche 1 oder 2.

5. Verfahren zum Erhöhen der Entladungskapazität in einem Batteriespannungsbereich von 0 bis 0,05 V, umfassend die folgenden Schritte:

(1) Herstellen einer Festkörperbatterie unter Verwendung eines kohlenstoffhaltigen Materials, das eine wahre Dichte von 1,30 g/cm$^3$ bis 1,70 g/cm$^3$, durch eine Butanol-Methode ermittelt, und eine mittlere Korngröße $D_{v50}$ von 1 bis 50 $\mu$m und eine exotherme Spitzentemperatur T (°C) nach einer Differentialthermoanalyse und einer wahren Butanol-Dichte $\rho_{Bt}$ (g/cm$^3$), die die folgende Formel (1) erfüllt:

$$300 \leq T - 100 x \rho_{Bt} \leq 570 \quad (1)$$

als eine aktive Masse der negativen Elektrode aufweist; und
(2) Einstellen eines Anodenpotentials einer erhaltenen Sekundärbatterie auf weniger als 0,05 V basierend auf einer Lithium-Referenzelektrode.

6. Festkörperbatterie nach Anspruch 4, die eine aktive Masse der positiven Elektrode aufweist, die nicht weniger als 500 Ah/kg pro spezifischem Gewicht der aktiven Masse der Negativelektrode entspricht.

**Revendications**

1. Électrode négative pour batterie entièrement solide comprenant :

une matière carbonée présentant une densité réelle de 1,30 g/cm$^3$ à 1,70 g/cm$^3$ déterminée par un procédé de butanol, une zone de surface spécifique de 0,5 à 50,0 m$^2$/g, une taille de particule moyenne $D_{v50}$ de 1 à 50 $\mu$m, et une température du pic exothermique T (en °C) selon l'analyse thermique différentielle et une densité réelle de butanol $\rho_{Bt}$ (G/cm$^3$) répondant à la formule suivante (1) :

$$300 \leq T - 100 x \rho_{Bt} \leq 570 \quad (1)$$

et
un électrolyte solide.

2. Électrode négative pour batterie entièrement solide selon la revendication 1, dans laquelle la matière carbonée présente un pic principal de signaux de résonance observés dans une plage de 80 à 200 ppm sur un côté à faible champ magnétique avec un signal de résonance LiCl défini à 0 ppm quand il est dopé électrochimiquement avec du lithium et soumis à l'analyse $^7$Li-NMR.

3. Électrode négative pour batterie entièrement solide selon l'une quelconque des revendications 1 ou 2, dans laquelle une source de carbone de la matière carbonée est une matière organique dérivée du pétrole ou du charbon, d'une résine thermoplastique ou d'une résine thermodurcissable.

4. Batterie entièrement solide contenant l'électrode négative pour batterie entièrement solide selon l'une quelconque des revendications 1 ou 2.

5. Procédé pour augmenter une capacité de décharge dans une plage de tension de batterie de 0 à 0,05 V, comprenant les étapes :

(1) de production d'une batterie entièrement solide utilisant une matière carbonée présentant une densité réelle de 1,30 g/cm$^3$ à 1,70 g/cm$^3$ déterminée par un procédé de butanol, et une taille de particule moyenne D$_{v50}$ de 1 à 50 µm, et une température de pic exothermique T (en °C) selon l'analyse thermique différentielle et une densité réelle de butanol $\rho_{Bt}$ (g/cm$^3$) répondant à la formule suivante (1) :

$$300 \leq T - 100 \times \rho_{Bt} \leq 570 \quad (1)$$

en tant que matière active d'électrode négative ; et
(2) d'établissement d'un potentiel d'anode d'une batterie secondaire obtenue à moins de 0,05 V sur la base d'une électrode de référence de lithium.

6. Batterie entièrement solide selon la revendication 4, présentant une matière active d'électrode positive équivalente à au moins 500 Ah/kg par poids volumique de la matière active d'électrode négative.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0613197 A1
- US 20130302698 A1
- JP H08064207 A
- JP H7330312 A
- JP H9283156 A